# EUROPEAN PATENT SPECIFICATION

(11) **EP 3 721 125 B1**
(45) Date of publication and mention of the grant of the patent: **15.11.2023**
(21) Application number: 18839922.4
(22) Date of filing: 06.12.2018
(51) Int. Cl.: F16L 11/08, B29C 70/52

(54) **HIGH-PRESSURE PIPE WITH PULTRUDED ELEMENTS AND METHOD FOR PRODUCING THE SAME**
HOCHDRUCKROHR MIT PULTRUDIERTEN ELEMENTEN UND VERFAHREN ZU SEINER HERSTELLUNG
TUYAU HAUTE PRESSION À ÉLÉMENTS PULTRUDÉS ET SON PROCÉDÉ DE PRODUCTION

(30) Priority: 08.12.2017 NL 2020042
(43) Date of publication of application: 14.10.2020
(73) Proprietor: Pipelife Nederland B.V., 1601 MA Enkhuizen (NL)
(72) Inventor: LAAN, Robbert Petrus Johannes, 1628 XD Hoorn (NL); DALMOLEN, Lambertus Gerrit Peter, 1502 GP Zaandam (NL)
(74) Representative: Nederlandsch Octrooibureau
(86) International application number: PCT/NL2018/050816
(87) International publication number: WO 2019/112431

(56) References cited:
- EP-A1- 2 796 274
- WO-A1-2017/048117
- WO-A1-2017/109221
- US-A1- 2009 000 683
- US-A1- 2015 030 295
- US-A1- 2017 122 467

## Description

### Technical field

The invention relates to a high-pressure flexible pipe and to a method for producing a high-pressure flexible pipe.

### Background art

High pressure pipes are used in many fields, for example, oil and gas for transporting fluids from one location to another. An example of a high-pressure pipe is found in WO 2017/048117.

The pipe comprises an inner liner around which a reinforcement strip is helically wound. The reinforcement strip consists of fibers embedded in a matrix body. The fibers are not adhered to the surrounding body. The fibers comprise twisted filaments, which are able to displace somewhat with respect to each other in the fiber.

Another example of a pipe for transporting materials is the flexible tubular conduit of US2017/0122467. The conduit has a tubular inner pressure structure including a tubular sheath and a pressure vault for taking up the radial forces. The conduit also has a tubular outer tensile structure having at least one web of tensile armor wires with a holding strip wound over the web of tensile armor wires. The holding strip comprises a layer of polymer material and a plurality of strands of fibers which are mineral fibers embedded in the layer of polymer material. The holding strip is wound around the web of tensile armor wires in order to hold the tensile armor wires radially against the pressure vault. US2009/000683 shows an apparatus and methods relating to flexible pipe and composite tape. Flexible pipe body for a flexible pipe comprises an internal pressure sheath and at least one armour layer over the sheath comprising a wound tape of composite material. A method for manufacturing a composite tape is disclosed making use of a pultrusion process.

### Summary

According to an aspect of the invention, there is provided a high-pressure flexible pipe, comprising an inner liner and a tape which is wrapped around and bearing against the inner liner. The tape comprises a polymer matrix and a plurality of pultruded elements embedded in the matrix. The pultruded elements each comprise elongated filaments covered by polymer resin. The polymer matrix and polymer resin are distinguishable and made of different materials. The inner liner consists of a polymer and a gas barrier layer or the inner liner is made of a polymer.

Such an arrangement provides a high-pressure flexible pipe with a reinforcement tape which is very strong. The pultruded elements in the matrix forming the tape result in a very strong tape without requiring metal filaments, making the tape not susceptible to rust and corrosion. The strength of the tape is increased by using the pultruded elements. A tape using these pultruded elements may be, for example, 50-100% stronger than a similar tape comprising a bundle of simple unimpregnated carbon filaments. The plurality of filaments in the pultruded elements can vary, but may be in the range of 24000 to 100000 filaments or even more.

The pultruded elements are formed by a pultrusion process which typically includes covering elongated filaments in a polymer resin and pulling through a die or plate to give a constant cross-section. The fibre elements are typically spread out, the resin is applied to impregnate the fibres and then bundles are pulled through the die or plate. The fibre elements are typically not twisted so that the resin can thoroughly coat and/or impregnate the fibres, though some embodiments could be. The polymer resin which covers the filaments may also sit in between the filaments and further increase the friction between the filaments.

The pultrusion process by which the pultruded elements are made can further include heating and curing of the polymer resin. After the curing, the pultruded elements may have a tensile strength of, for example, double the tensile strength of a coated fibre with the same diameter. In this manner, the intrinsic strength of the filaments is used much more efficiently. Typically, the pultruded elements have a diameter of between 0.5 millimetres and 2.5 millimetres and the filaments have a diameter of between 4 micrometres and 100 micrometres.

The tape bears directly against the inner liner, so there are no layers present in between. This ensures that the pipe stays high strength but is simultaneously light and flexible. By bearing against the inner liner, the tape is able to provide hydrostatic pressure strength for the pipe.

The pultruded elements may be much harder than the polymer matrix. For example, the pultruded elements may have a tensile modulus of at least 100 GPa while the polymer matrix may have a tensile modulus of between 0.2 GPa and 5 GPa. The pultruded elements may have a tensile strength of at least 2000 MPa. This allows the pultruded elements to provide strength to the tape, but the matrix allows the tape to remain flexible for easy wrapping around pipes of all different sizes as well as transport and storage, for example on a bobbin.

The inner liner may comprise a gas barrier layer; for example, a foil; at the inside, at the outside, and/or in between, which avoids or reduces leaking of gases from the pipe to the outside. The gas barrier layer may be very thin, about 10 micrometres, and may be made essentially of aluminum material which provides a gas barrier. Alternatively, it may comprise different metals or even gas-tight polymers. The gas barrier layer may comprise a polymer - metal - polymer sandwich structure in some embodiments. The inner liner is entirely made of a polymer, preferably polyethylene (PE), or the inner liner consists essentially of the polymer and the aforementioned gas barrier layer, wherein the polymer may be provided radially at a single side or at both sides of the gas barrier layer, i.e. with the gas barrier layer at an inner surface of the inner liner, at the outer surface of the inner liner, or in the middle, radially in between two polymer layers. At least the radially outer part of the inner liner (i.e. the part in contact with the tape) may be made of the polymer. The inner liner may thus be free of metals, with the possible exception of the very thin, continuous gas barrier layer. The inner liner is free of any pressure load bearing reinforcement elements, to keep the pipe light and flexible. The role of the pressure load bearing is taken up by the tape layers.

The pipe may have a broad range of diameters, for example, 100 millimetres, 200 millimetres, but it can be more or less depending on application requirements.

The pultruded elements may be all aligned and parallel in a single row when they are embedded in the polymer matrix. The single row can ensure that the tape maintains the desired flexibility for the application. In other embodiments, there could be multiple rows of pultruded elements in the tape and/or non-parallel pultruded elements depending on the specific tape and pipe requirements. The pultruded elements are typically very long, such that they can form many windings around the pipe.

According to an embodiment, the polymer matrix is a thermoplastic. Thermoplastic allows for an easy to form matrix for embedding the pultruded elements for forming the tape.

According to an embodiment, the tape is adapted for having hydrostatic strength of at least 150 bar inside the pipe, preferably at least 250 bar. Typically, the tape is adapted for safe working pressures of at least 50 bar, preferably at least 100 bar, more preferably at least 150 bar, and possibly at least 200 bar. This relates to hydrostatic strength in the range of at least 100 to 400 bar, preferably at least 150 bar, more preferably at least 250 bar. The tape provides a strong yet flexible way of providing hydrostatic pressure strength to the pipe. In some embodiments, the tape may be adapted for withstanding hydrostatic pressures of between 50 bar and 600 bar. When referring to hydrostatic strength, it is generally meant to refer to the short-term bursting pressure as measured using the standards defined in ASTM D1599.

According to an embodiment, the tape is wrapped helically around the inner liner. The wrapping angle can be, for example, 40 degrees to 60 degrees. Wrapping helically can ensure all parts of the inner liner are adequately and consistently covered by the tape without requiring cutting of the tape. It also allows seams between different parts of the tape to be covered by other parts of the tape.

According to an embodiment, the tape is welded to the inner liner. Welding the tape to the inner liner promotes an easy way of ensuring the pipe layers remain steady and connected relative to each other to form a strong stable pipe. In some embodiments, the tape may be stuck, adhered or connected to the inner liner by other means, possibly involving heating. Welding may be done by external infrared heating, by laser welding or other suitable methods. Infrared heating may be done in a tunnel oven in which the pipe is heated to temperatures well above the melting temperature of the matrix, such that the matrix welds to the inner liner. Laser welding involves heating only the surface of the inner liner and of the tape locally with the laser, such that they weld together. As such, laser welding is typically a much faster process both for the heating and the curing after the welding.

According to an embodiment, the polymer matrix and the inner liner are made from materials which are weldable together. By forming the polymer matrix and inner liner of materials which are weldable together, a strong connection can be formed without requiring other materials, adhesives, bonding layers, etc. This results in a simple process which produces a strong pipe with high hydrostatic pressure strength.

According to an embodiment, the polymer matrix and the inner liner are made from materials from the same polymer class. By choosing the materials from the same generic class of polymers, they may be weldable together, which may increase the strength of the connections and overall pipe. In certain embodiments, the materials of the polymer matrix and the inner liner are both polyethylene-like or both polyamide-like, though also other materials can be conceived, depending on the conditions and requirements of the pipe, such as polyvinylidene fluoride (PVDF), polyketone, polyphenylene sulphide (PPS), polyether ether ketone (PEEK).

According to an embodiment, the pipe comprises two layers of tape, oppositely wound. Oppositely wound means having an opposite winding angle with respect to the pipe's longitudinal axis. This arrangement can ensure that the pipe has sufficient strength by winding a plurality of layers of tape. The strength of the tape allows the use of only two layers in most conditions, making the pipe easier to form than other pipes which need many winding layers to provide sufficient strength.

According to an embodiment, the pipe comprises four layers of tape, which are oppositely wound in pairs. When four layers of tape are present, two of them may be wound clockwise, and two counter-clockwise with an opposite angle with respect to the pipe's longitudinal axis.

According to an embodiment, the filaments are made of carbon. Carbon filaments provide high strength to form the pultruded elements, but can also be flexible with respect to each other. Furthermore, carbon is typically not chemically affected by hydrocarbons transported by the pipe. Alternatively, glass or aramid filaments may be used.

According to an embodiment, a thickness of a single tape layer is between 1% and 3% of the diameter of the pipe. A single tape layer may have a thickness of between 1 millimetre and 2.5 millimetres, but could be more or less. Such a thickness can provide the needed hydrostatic pressure strength without adding a lot of bulk or weight to the overall pipe.

According to an embodiment, the polymer resin is a thermosetting resin. Using such a thermosetting resin means that the resin is relatively easy to work with in the formation of the tape and setting of the pultruded elements, and provides the required properties once cured. Thermosetting resins typically require temperatures for curing that are below the temperature at which the pultruded elements would melt, therefore making the manufacture relatively simple and not damaging for the pultruded elements. Alternatively, the polymer resin used for the pultruded elements may be a thermoplastic with a melting temperature which is much higher than the processing temperature of the tape.

According to an embodiment, the polymer resin comprises epoxy. Epoxy is a resin which is light, strong and easy to process. Alternatively, the polymer resin may comprise a polyester or a vinylester.

According to an embodiment, the polymer resin comprises a phenol, preferably bisphenol A. Bisphenol A is widely available and easy to work with.

According to an embodiment, the pipe further comprises a polymer outer sheet surrounding the tape. The outer sheet may protect and shield the pipe against any outside damage or contamination. The outer sheet therefore may increase the durability of the pipe. The outer sheet may be of the same generic polymer class as the inner liner and the polymer matrix of the tape. It may be stuck or welded to the tape. The outer sheet may be made of polyethylene.

According to an embodiment, the polymer matrix comprises an additive to increase friction and adhesion with the pultruded elements. Such an additive can ensure that the pultruded elements remain properly embedded in the matrix and that the tape elements do not come apart from various forces. Another method which may be used alternatively or in addition is to roughen the surface of the pultruded elements to increase friction and adhesion within the polymer matrix.

Connecting such pipes together can be done by clamping a sleeve around the end parts that need to be connected. Alternatively, an electrofusion fitting may be used for coupling the pipes. In this method, the end surfaces of two pipe ends are melted and brought together. A reinforced sleeve is fitted around the pipe ends, in which a heating coil is provided, by which the sleeve and pipe ends are welded together. Adhesion or friction between pultruded element and polymer matrix is needed to avoid popping out of the pultruded element from the tape at an end of the pipe that needs to be coupled. Electrofusion coupling has the advantage that no metal is used, so corrosion is avoided.

According to an aspect of the invention, there is provided a method for producing a high-pressure flexible pipe, the method comprising the steps of:
- providing filaments;
- dipping the filaments in polymer resin;
- pulling the dipped filaments through a hole in a plate so as to form pultruded elements;
- embedding the pultruded elements in a polymer matrix;
- providing a tube-shaped inner liner;
- wrapping the tape around the inner liner, such that the tape bears against the inner liner;

wherein the polymer matrix and polymer resin are made of different materials;
and wherein
   - the inner liner consists of a polymer and a gas barrier layer; or
   - the inner liner is made of a polymer.

Such a method produces a pipe that is relatively simple to produce, and that can provide sufficient hydrostatic pressure through the tape wrapped around the inner liner.

According to an embodiment, wrapping the tape comprises helically wrapping the tape around the inner liner.

According to an embodiment, wrapping the tape comprises welding the tape to the inner liner.

According to an embodiment, the polymer resin is a thermosetting resin.

According to an embodiment, the polymer resin comprises epoxy.

The various aspects discussed in this patent can be combined in order to provide additional advantages.

### Brief description of drawings

Embodiments will now be described, by way of example only, with reference to the accompanying schematic drawings in which corresponding reference symbols indicate corresponding parts.
Figure 1 shows a sectional view of a high-pressure flexible pipe;
Figure 2 shows a sectional view of a tape.

The figures are meant for illustrative purposes only, and do not serve as restriction of the scope or the protection as laid down by the claims.

### Detailed description

Further advantages, features and details of the present invention will be explained in the following description of some embodiments thereof. In the description, reference is made to the attached figures.

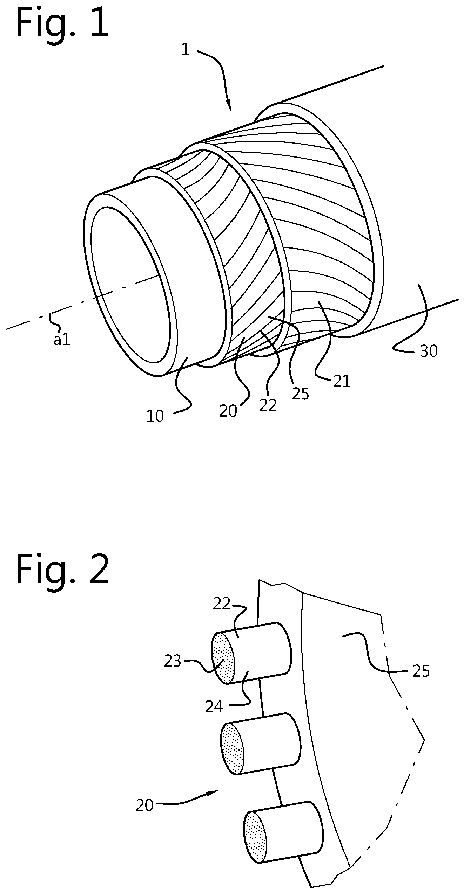

Figure 1 shows a sectional view of a tubular-shaped high-pressure flexible pipe 1, where some components are shown partially to show the underlying components. The pipe 1 includes an inner liner 10, first layer of tape 20, second layer of tape 21 and outer sheet 30. A flexible pipe 1 can be used for a variety of different purposes and industries, for example, the transport of high pressure fluids. The shown part of the pipe 1 extends along a longitudinal axis a1, although it is flexible and does not need to extend along the longitudinal axis a1 for a long distance. Typically, the pipe has a diameter of between 100 and 200 millimetres, although this may be different depending on the specific application requirements.

Inner liner 10 is typically formed of polyethylene, though can be formed of other materials depending on the intended use of pipe 1. Inner liner 10 functions as a protective layer, and can protect pipe 1 at the inner side, particularly when transporting corrosive, abrasive or volatile fluids. The inner liner 10 may comprise a very thin gas barrier foil, at the inside, at the outside, and/or in between, which avoids or reduces leaking of gases from the pipe to the outside. The gas barrier foil may be made essentially of aluminium. Alternatively, it may be made of different metals or even gas-tight polymers.

Tape layers 20, 21 are helically wound tapes formed of pultruded elements 22 within a polymer matrix 25, which will be discussed more in detail in relation to Fig. 2. The tape layers 20, 21 reinforce the pipe 1 and provide hydrostatic pressure strength to the pipe 1, such that the pipe 1 can withstand pressures of at least 150 bar because of the reinforcement provided by the tape layers 20, 21. Each tape layer 20, 21 may be wound at a specific winding angle with respect to the longitudinal axis a1 of the pipe 1, for example, 40 degrees to 60 degrees, though it can be outside this range when suitable. Wrapping helically can ensure all parts of the inner liner 10 are adequately and consistently covered by the tape 20 without requiring cutting of the tape 20. The tape layers 20, 21 are wound in opposite directions to further promote adequate coverage of the inner liner 10 by the tape layers 20, 21. The opposite winding also increases the radial strength of the pipe 1. The strength of the tape layers 20, 21 allows the use of only two layers in most conditions, making the pipe 1 easier to form than other pipes which need many winding layers to provide sufficient strength. The tape layers 20, 21 may be supplied in very long stretches in order to provide a strong and well-connected reinforcement layer.

In forming pipe 1, tape layers 20, 21 are wound around inner liner 10 to bear directly against the inner liner 10, with no layers in between. In this manner the tape layers 20, 21 directly reinforce the pipe 1, while no further layers may be necessary. The tape layers 20, 21 can be welded to each other and to the inner liner 10 to ensure a strong connection between tape layers 20, 21 and with the inner liner 10. In this way, the tape layers 20, 21 directly provide additional hydrostatic pressure strength to the inner liner 10. Typically, the tape layers 20, 21 and inner liner 10 are made of materials that are weldable to each other, to promote a strong connection without the need of adhesives or bonding layers.

Outer sheet 30 is typically polyethylene, and functions as a protective barrier around tape layers 20, 21. The outer sheet 30 can protect and shield the pipe 1 against any outside damage or contamination. This increases the durability of the pipe 1. The outer sheet 30 is typically made of a material which is compatible with the tape 20, 21, such that they stick well together and cracks are avoided as much as possible.

Advantages of the pipe 1 include larger strength compared to other pipes, without risking corrosion or rust. This is caused by the pultruded elements 22 in the tape 20, 21 which do not contain any metal. Further advantage due to the strength of the tape 20, 21 is that only two layers of tape may be sufficient to ensure sufficient hydrostatic pressure strength such that the pipe walls remain relatively thin. This results in a relatively light weight pipe 1.

Figure 2 shows a sectional view of a small part of tape 20, comprising three pultruded elements 22 embedded in a polymer matrix 25. The pultruded elements 22 comprise a plurality of filaments 23 covered in epoxy resin 24. The filaments 23 can be made of carbon, which combines a high tensile strength with a high flexibility. Alternatively, glass or aramid may be used. There may be 24000 to 100000 filaments 23 embedded in a single pultruded element 22, or even more. The pultruded elements 22 are formed by a pultrusion process which includes covering elongated filaments 23 in the epoxy resin 24 and pulling through a die or plate to give the pultruded elements 22 a constant cross-section. Using epoxy resin 24 results in a light and strong pultruded element which is easy to process. Alternatively, the polymer resin 24 may comprise a polyester or a vinylester.

The resin 24 surrounding the pultruded elements 23 may subsequently be cured to further increase the friction between the filaments 23. Increased friction allows for a higher tensile strength of the pultruded elements 22. After curing or heating, the pultruded elements 22 may have a tensile strength of, for example, double the tensile strength of a coated fibre with the same diameter.

The pultruded elements 22 are typically much harder than the polymer matrix 25. For example, the pultruded elements 22 may have a tensile modulus of at least 100 GPa while the polymer matrix 25 may have a tensile modulus of between 0.2 GPa and 5 GPa. The pultruded elements 23 may have a tensile strength of at least 2000 MPa. This allows the pultruded elements 23 to provide strength to the tape 20, but the polymer matrix 25 allows the tape 20 to remain flexible for easy wrapping around pipes 1 of all different sizes as well as transport and storage, for example on a bobbin.

The pultruded elements 22 are all generally aligned and parallel in a single row when they are embedded in the polymer matrix 25. The single row can ensure that the tape 20 maintains the desired flexibility for the application. In other embodiments, there could be multiple rows of pultruded elements 22 in the tape 20 and/or non-parallel pultruded elements 22 depending on the specific tape and pipe requirements.

The polymer matrix 25 is typically made of a thermoplastic, which allows for an easy to form the matrix for embedding the pultruded elements 22 for forming the tape 20. It needs to be thin enough to be flexible, but strong enough to hold the pultruded elements 22 together in the tape 20, and make sure the pultruded elements 22 do not break out of the tape 20. Typically the thickness of a single tape layer is between 1% and 3% of the diameter of the pipe 1, which keeps the pipe 1 light and flexible, while providing sufficient hydrostatic pressure strength.

The advantages of the tape 20 include a tensile strength of the tape 20 which is 50% to 100% larger compared to tape with non-pultruded carbon fibres. Furthermore, no metal is needed in the tape 20, which removes the risk of corrosion in the tape and overall pipe, leading to a strong pipe with a long working lifespan.

The present invention may be embodied in other specific forms without departing from the scope of protection as defined in the appended claims. The described embodiments are to be considered in all respects only as illustrative and not restrictive. The scope of the invention is, therefore, indicated by the appended claims rather than by the foregoing description. It will be apparent to the person skilled in the art that alternative and equivalent embodiments of the invention can be conceived and reduced to practice.

## Claims

1. High-pressure flexible pipe (1), comprising
- an inner liner (10);
- a tape (20), wrapped around and bearing against the inner liner (10), wherein the tape (20) comprises:
• a polymer matrix (25); and
• a plurality of pultruded elements (22) embedded in the polymer matrix (25), wherein the pultruded elements (22) each comprise a plurality of elongated filaments (23) covered by polymer resin (24);
wherein the polymer matrix and polymer resin are made of different materials;
and wherein
- the inner liner consists of a polymer and a gas barrier layer; or
- the inner liner is made of a polymer.

2. High-pressure flexible pipe (1) according to claim 1, wherein the polymer matrix (25) is made of a thermoplastic polymer.

3. High-pressure flexible pipe (1) according to any one of the preceding claims, wherein the tape (20) is adapted for having hydrostatic strength of at least 150 bar.

4. High-pressure flexible pipe (1) according to any one of the preceding claims, wherein the tape (20) is welded to the inner liner (10) and/or wherein the polymer matrix (25) and the inner liner (10) comprise materials which are from the same polymer class.

5. High-pressure flexible pipe (1) according to any one of the preceding claims, comprising at least two layers of tape (20, 21), oppositely wound.

6. High-pressure flexible pipe (1) according to any one of the preceding claims, wherein the filaments (23) are made of carbon.

7. High-pressure flexible pipe (1) according to any one of the preceding claims, wherein a thickness of a single layer of tape (20) is between 1% and 3% of the diameter of the pipe (1).

8. High-pressure flexible pipe (1) according to any one of the preceding claims, wherein the polymer resin (24) is a thermosetting resin, and comprises epoxy, and/or a phenol, preferably bisphenol A.

9. High-pressure flexible pipe (1) according to any one of the preceding claims, wherein the polymer matrix (25) comprises an additive to increase friction and adhesion with the pultruded elements (22).

10. High-pressure flexible pipe (1) according to any one of the preceding claims, wherein the inner liner comprises a gas barrier layer, and/or consists of PE and a gas barrier layer.

11. Method for producing a high-pressure flexible pipe (1), the method comprising the steps of:
- providing filaments (23);
- dipping the filaments (23) in polymer resin (24);
- pulling the dipped filaments (23) through a hole in a plate so as to form pultruded elements (22);
- embedding the pultruded elements (22) in a polymer matrix (25) so as to form tape (20);
- providing an inner liner (10) which is tube-shaped;
- wrapping the tape (20) around the inner liner (10), such that the tape (20) bears against the inner liner (10);
wherein the polymer matrix and polymer resin are made of different materials;
and wherein
- the inner liner consists of a polymer and a gas barrier layer; or
- the inner liner is made of a polymer.

12. Method according to claim 11, wherein wrapping the tape (20) around the inner liner (10) comprises helically wrapping the tape (20) around the inner liner (10).

13. Method according to any one of claims 11-12, wherein wrapping the tape (20) around the inner liner (10) comprises welding the tape (20) to the inner liner (10).

14. Method according to any one of claims 11-13, further comprising, after wrapping the tape around the inner liner, the step of heating the pipe above the melting temperature of the polymer matrix.

## Patentansprüche

1. Flexibles Hochdruckrohr (1), das Folgendes umfasst:
- eine Innenauskleidung (10);
- ein Band (20), das um die Innenauskleidung (10) gewickelt ist und an dieser anliegt, wobei das Band (20) Folgendes umfasst:
• eine Polymermatrix (25); und
• eine Vielzahl von pultrudierten Elementen (22), die in die Polymermatrix (25) eingebettet sind, wobei die pultrudierten Elemente (22) jeweils eine Vielzahl von länglichen Filamenten (23) umfassen, die mit Polymerharz (24) bedeckt sind;
wobei die Polymermatrix und das Polymerharz aus unterschiedlichen Materialien bestehen;
und wobei
- die Innenauskleidung aus einem Polymer und einer Gassperrschicht besteht; oder
- die Innenauskleidung aus einem Polymer besteht.

2. Flexibles Hochdruckrohr (1) nach Anspruch 1, wobei die Polymermatrix (25) aus einem thermoplastischen Polymer besteht.

3. Flexibles Hochdruckrohr (1) nach einem der vorhergehenden Ansprüche, wobei das Band (20) für eine hydrostatische Festigkeit von mindestens 150 bar ausgelegt ist.

4. Flexibles Hochdruckrohr (1) nach einem der vorhergehenden Ansprüche, wobei das Band (20) mit der Innenauskleidung (10) verschweißt ist und/oder wobei die Polymermatrix (25) und die Innenauskleidung (10) Materialien umfassen, die aus derselben Polymerklasse stammen.

5. Flexibles Hochdruckrohr (1) nach einem der vorhergehenden Ansprüche, das mindestens zwei Bandschichten (20, 21) umfasst, die entgegengesetzt gewickelt sind.

6. Flexibles Hochdruckrohr (1) nach einem der vorhergehenden Ansprüche, wobei die Filamente (23) aus Kohlenstoff bestehen.

7. Flexibles Hochdruckrohr (1) nach einem der vorhergehenden Ansprüche, wobei eine Dicke einer einzelnen Bandschicht (20) zwischen 1 % und 3 % des Durchmessers des Rohrs (1) beträgt.

8. Flexibles Hochdruckrohr (1) nach einem der vorhergehenden Ansprüche, wobei das Polymerharz (24) ein duroplastisches Harz ist und Epoxid und/oder ein Phenol umfasst, vorzugsweise Bisphenol A.

9. Flexibles Hochdruckrohr (1) nach einem der vorhergehenden Ansprüche, wobei die Polymermatrix (25) einen Zusatzstoff zum Erhöhen der Reibung und Haftung mit den pultrudierten Elementen (22) umfasst.

10. Flexibles Hochdruckrohr (1) nach einem der vorhergehenden Ansprüche, wobei die Innenauskleidung eine Gassperrschicht umfasst und/oder aus PE und einer Gassperrschicht besteht.

11. Verfahren zum Herstellen eines flexiblen Hochdruckrohrs (1), wobei das Verfahren die folgenden Schritte umfasst:
- Bereitstellen von Filamenten (23);
- Eintauchen der Filamente (23) in Polymerharz (24);
- Ziehen der eingetauchten Filamente (23) durch ein Loch in einer Platte, um pultrudierte Elemente (22) zu bilden;
- Einbetten der pultrudierten Elemente (22) in eine Polymermatrix (25), um ein Band (20) zu bilden;
- Bereitstellen einer Innenauskleidung (10), die röhrenförmig ist;
- Wickeln des Bandes (20) um die Innenauskleidung (10), so dass das Band (20) an der Innenauskleidung (10) anliegt;
wobei die Polymermatrix und das Polymerharz aus unterschiedlichen Materialien bestehen;
und wobei
- die Innenauskleidung aus einem Polymer und einer Gassperrschicht besteht; oder
- die Innenauskleidung aus einem Polymer besteht.

12. Verfahren nach Anspruch 11, wobei das Wickeln des Bandes (20) um die Innenauskleidung (10) das spiralförmige Wickeln des Bandes (20) um die Innenauskleidung (10) umfasst.

13. Verfahren nach einem der Ansprüche 11-12, wobei das Wickeln des Bandes (20) um die Innenauskleidung (10) das Verschweißen des Bandes (20) mit der Innenauskleidung (10) umfasst.

14. Verfahren nach einem der Ansprüche 11-13, das ferner, nach dem Wickeln des Bandes um die Innenauskleidung, den Schritt des Erhitzens des Rohrs über die Schmelztemperatur der Polymermatrix umfasst.

## Revendications

1. Tuyau flexible haute pression (1) comprenant
- un revêtement intérieur (10)
- un ruban (20), enroulé autour et s'appuyant contre le revêtement intérieur (10), où le ruban (20) comprend :
• une matrice polymère (25) ; et
• une pluralité d'éléments pultrudés (22) intégrés dans la matrice polymère (25), où les éléments pultrudés (22) comprennent chacun une pluralité de filaments allongés (23) recouverts de résine polymère (24) ;
où la matrice polymère et la résine polymère sont faites de matériaux différents ;
et où
- le revêtement intérieur consiste en un polymère et en une couche barrière aux gaz ; ou
- le revêtement intérieur est fait d'un polymère.

2. Tuyau flexible haute pression (1) selon la revendication 1, où la matrice polymère (25) est faite d'un polymère thermoplastique.

3. Tuyau flexible haute pression (1) selon l'une quelconque des revendications précédentes, où le ruban (20) est adapté pour avoir une résistance hydrostatique d'au moins 150 bars.

4. Tuyau flexible haute pression (1) selon l'une quelconque des revendications précédentes, où le ruban (20) est soudé au revêtement intérieur (10) et/ou où la matrice polymère (25) et le revêtement intérieur (10) comprennent des matériaux qui sont de la même classe de polymères.

5. Tuyau flexible haute pression (1) selon l'une quelconque des revendications précédentes, comprenant au moins deux couches de ruban (20, 21), enroulées de manière opposée.

6. Tuyau flexible haute pression (1) selon l'une quelconque des revendications précédentes, où les filaments (23) sont faits en carbone.

7. Tuyau flexible haute pression (1) selon l'une quelconque des revendications précédentes, où une épaisseur d'une seule couche de ruban (20) est entre 1 % et 3 % du diamètre du tuyau (1).

8. Tuyau flexible haute pression (1) selon l'une quelconque des revendications précédentes, où la résine polymère (24) est une résine thermodurcissable, et comprend de l'époxy, et/ou un phénol, de préférence du bisphénol A.

9. Tuyau haute pression (1) selon l'une quelconque des revendications précédentes, où la matrice polymère (25) comprend un additif pour augmenter la friction et l'adhésion avec les éléments pultrudés (22).

10. Tuyau flexible haute pression (1) selon l'une quelconque des revendications précédentes, où le revêtement intérieur comprend une couche barrière aux gaz, et/ou consiste en PE et en une couche barrière aux gaz.

11. Procédé de fabrication d'un tuyau flexible haute pression (1), le procédé comprenant les étapes de :
- fournir des filaments (23) ;
- tremper les filaments (23) dans une résine polymère (24) ;
- tirer les filaments trempés (23) à travers un trou dans une plaque afin de former des éléments pultrudés (22) ;
- intégrer les éléments pultrudés (22) dans une matrice polymère (25) afin de former un ruban (20) ;
- fournir un revêtement intérieur (10) qui est en forme de tube ;
- enrouler le ruban (20) autour du revêtement intérieur (10), de sorte que le ruban (20) s'appuie contre le revêtement intérieur (10) ;
où la matrice polymère et la résine polymère sont faites de matériaux différents ;
et où
- le revêtement intérieur consiste en un polymère et en une couche barrière aux gaz ; ou
- le revêtement intérieur est fait d'un polymère.

12. Procédé selon la revendication 11, où enrouler le ruban (20) autour du revêtement intérieur (10) comprend enrouler le ruban de manière hélicoïdale (20) autour du revêtement intérieur (10).

13. Procédé selon l'une quelconque des revendications 11 à 12, où enrouler le ruban (20) autour du revêtement intérieur (10) comprend souder le ruban (20) au revêtement intérieur (10).

14. Procédé selon l'une quelconque des revendications 11 à 13, comprenant en outre, après avoir enroulé le ruban autour du revêtement intérieur, l'étape de chauffer le tuyau au-dessus de la température de fusion de la matrice polymère.
